# EUROPÄISCHE PATENTSCHRIFT

(11) **EP 3 553 355 B1**
(45) Veröffentlichungstag und Bekanntmachung des Hinweises auf die Patenterteilung: **09.03.2022**
(21) Anmeldenummer: 18465513.2
(22) Anmeldetag: 12.04.2018
(51) Int. Cl.: F16K 5/06, F16K 11/087, F01P 7/14, F16J 15/10

(54) **DICHTUNG UND FLUIDREGELVENTIL**
SEAL AND FLUID CONTROL VALVE
JOINT D'ÉTANCHÉITÉ ET SOUPAPE DE RÉGULATION DE FLUIDE

(43) Veröffentlichungstag der Anmeldung: 16.10.2019
(73) Patentinhaber: Vitesco Technologies GmbH, 93055 Regensburg (DE)
(72) Erfinder: Popa, Alexandru, 240048 Rimnicu Vilcea (RO)
(74) Vertreter: Vitesco Technologies

(56) Entgegenhaltungen:
- EP-A2- 1 318 337
- DE-C1- 19 632 533
- DE-U1-202015 100 400
- GB-A- 1 229 515
- US-A1- 2005 072 953
- US-B1- 6 361 051

## Beschreibung

Die vorliegende Erfindung betrifft eine Dichtung und ein Fluidventil mit einer solchen Dichtung. Unter einem Fluidventil ist dabei insbesondere ein Kühlwasserventil, insbesondere zur Verwendung in einem Fahrzeug zu verstehen. Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Dichtungen als solche können unterschiedliche Aufgaben haben. Sie können z.B. dem Zweck dienen, ungewollte Fluidverluste zu vermeiden oder zumindest zu begrenzen. Unter einem Fluid kann dabei ein flüssiges und/oder gasförmiges Medium verstanden werden.

Die DE 20 2015 100 400 U1 betrifft eine Dichtungsanordnung für ein Ventil, umfassend zumindest einen, zumindest ein erstes Material umfassenden und zumindest bereichsweise elastisch verformbaren Hauptkörper, zumindest einen, auf einer einem Ventilelement des Ventils zugewandten Seite des Hauptkörpers angeordneten, zumindest bereichsweise ein zweites Material umfassenden Gleitkörper, und zumindest einen zumindest bereichsweise in den Hauptkörper eingebetteten und zumindest ein drittes Material umfassenden Versteifungskörper.

Die DE 196 32 533 C1 betrifft ein Drehschieberventil zur wahlweisen strömungstechnischen Schaltung zweier Strömungskreisläufe, aufweisend eine mit einem Zulauf und zwei Auslässen versehene, im Wesentlichen zylindrisch ausgebildete Ventilkammer, in welcher ein um eine Mittelachse drehbarer Ventilkörper angeordnet ist, wobei die Ventilkammer einen von dem Ventilkörper verschließbaren axialen Auslass zum ersten Strömungskreislauf aufweist und wobei die Ventilkammer einen wiederum mittels des Ventilkörpers verschließbaren radialen Auslass zum zweiten Strömungskreislauf aufweist, sowie eine Axial- und eine Radialdichtung hierfür.

Die EP 1 318 337 A2 betrifft ein Regelventil, umfassend ein Gehäuse mit einer Ventilkammer, wobei die Ventilkammer zumindest einen Zulauf und zumindest einen Ablauf aufweist, wobei der Zulauf und/oder der Ablauf durch einen, um eine Achse drehbaren und in der Ventilkammer angeordneten Drehschieber bedarfsweise zumindest teilweise verschließbar sind, wobei der Zulauf und/oder der Ablauf auf der dem Drehschieber zugewandten Seite des Gehäuses von einer Dichtung umschlossen ist und wobei die Dichtung unter elastischer Vorspannung dichtend an die dem Gehäuse zugewandte Oberfläche des Drehschiebers anlegbar ist. Aufgabe der vorliegenden Erfindung ist es, eine Dichtung zur Verwendung in einem Fluidventil, insbesondere in Gestalt eines Kühlwasserventils bereitzustellen, welche höchsten Anforderungen an eine Langzeit-Dichtheit unter bekanntlich großen Temperaturschwankungen einer Verbrennungsmotorenperipherie und/oder einer Elektromotorenperipherie gerecht wird. Die Dichtung soll darüber hinaus kostengünstig herstellbar sein. Diese Aufgabe wird durch den Anspruch 1 gelöst, der eine Dichtung zur Verwendung in einem Fluidventil unter Schutz stellt. Es wird ferner ein Fluidventil mit einer solchen Dichtung unter Schutz gestellt (vgl. Anspruch 16) sowie eine Verwendung des Fluidventils als Kühlwasserventil (vgl. Anspruch 18. Vorteilhafte Ausführungsformen der Erfindung sind Gegenstand der Unteransprüche.

Es wird eine Dichtung zur Verwendung in einem Fluidventil vorgeschlagen. Die Dichtung umfasst dabei ein erstes, elastisch verformbares Kunststoffteil und ein zweites, als Hart-Dichtelement ausgebildetes Kunststoffteil, welches mit dem ersten Kunststoffteil verbunden ist. Das erste und das zweite Kunststoffteil bilden dabei eine Dichtungsanordnung mit einem ersten stirnseitigen Ende zur statisch dichtenden Anlage gegen einen stellbaren Ventilkörper des Fluidventils und ein zweites stirnseitiges Ende zur dynamisch dichtenden Anlage gegen ein Ventilgehäuse des Fluidventils. Dabei weist das erste stirnseitige Ende eine erste Stirnseite mit einer umlaufend vorspringenden Wulst zur Abdichtung gegenüber dem stellbaren Ventilkörper auf. Aber auch das zweite stirnseitige Ende kann eine zweite Stirnseite mit einer umlaufend vorspringenden Wulst zur Abdichtung gegenüber dem Ventilgehäuse aufweisen.

Unter einem Hart-Dichtelement ist dabei grundsätzlich ein harter Kunststoff zu verstehen, der sich als solcher beim Zusammenwirken mit dem Ventilkörper in einer Einbaulage der Dichtung im Fluidventil, in welcher der Ventilkörper die Dichtung mit Druck beaufschlägt und dabei verspannt, elastisch nicht oder zumindest im Wesentlichen elastisch nicht zusammendrücken lässt. Der auf die Dichtung ausgeübte Druck variiert dabei abhängig von einer Toleranzlage des Fluidventils und infolge einer Verstellung bzw. Aktuierung des Ventilkörpers.

Das Hart-Dichtelement verleiht der Dichtung ventilkörperseitig eine gewünschte Härte und Gleitfähigkeit, um mit dem Ventilkörper optimal zusammenwirken zu können. Das erste Kunststoffteil hingegen verleiht der Dichtung eine gewünschte elastische Verformbarkeit bzw. ein gewünschtes elastisches Verhalten. Beim Hart-Dichtelement kann es sich dabei z.B. um einen PTFEKunststoff (PTFE steht dabei für Polytetrafluorethylen) und dergleichen mehr handeln. Beim ersten Kunststoffteil hingegen kann es sich z.B. um einen EPDM-Kunststoff (EPDM steht dabei für Ethylen-Propylen-Dien) und dergleichen mehr handeln. Die vorgeschlagene Dichtung löst die eingangs gestellte Aufgabe.

Dabei wird ferner vorgeschlagen, das zweite Kunststoffteil in Gestalt einer dünnwandigen Struktur auszubilden, welche im Bereich der Wulst gegenüber dem stellbaren Ventilkörper abdichtet. Dies trägt zur Material- und somit zur Kosteneinsparung bei.

Nach einer Ausführungsform kann das zweite Kunststoffteil zumindest im Bereich der Wulst komplementär zum ersten Kunststoffteil geformt sein, wobei sich das erste Kunststoffteil in das zweite Kunststoffteil erstreckt und dabei die Wulst bildet. Auch dies trägt zur Material- und somit zur Kosteneinsparung bei.

Nach einer weiteren Ausführungsform kann das zweite Kunststoffteil als eine dünne Kunststoffschicht auf das erste Kunststoff teil aufvulkanisiert sein, so dass das erste und zweite Kunststoffteil eine einstückige Kunststoffteileanordnung bilden.

Nach einer weiteren Ausführungsform kann in das erste Kunststoffteil zumindest ein Stützelement aus Kunststoff und/oder Metall integriert sein. Das Stützelement kann dabei geschlossen umlaufend ausgebildet sein. Ferner kann das Stützelement zumindest ein Festlegungsmittel zur relativen Festlegung des Stützelements gegenüber dem ersten Kunststoffteil aufweisen.

Nach einer weiteren Ausführungsform ist das Stützelement mit dem Kunststoff des ersten Kunststoffteils zumindest teilweise umspritzt. Alternativ dazu kann das Stützelement mit dem ersten Kunststoffteil auch nur gefügt sein. Dabei kann das erste Kunststoffteil auf das Stützelement aufgezogen oder in das Stützelement eingedrückt sein.

Erfindungsgemäß ist bezüglich einer Dichtungsöffnung am ersten Kunststoffteil innenseitig bzw. an einer umlaufenden Innenseite des ersten Kunststoffteils zumindest eine fluidisch bzw. hydraulisch kraftverstärkende

Ausnehmung ausgeformt. Dabei kann die Ausnehmung zweckmäßigerweise geschlossen umlaufend ausgebildet sein. Die Ausnehmung wird durch zwei einander gegenüber liegende, lippenartige, elastisch verformbare, fluidisch bzw. hydraulisch kraftverstärkende Abschnitte begrenzt, die eine Eintrittsöffnung der Ausnehmung für ein Fluid bilden.

Zusätzlich dazu kann bezüglich der Dichtungsöffnung an der Dichtung ventilkörper- und außenseitig zumindest ein lippenartiger, elastisch verformbarer, fluidisch bzw. hydraulisch kraftverstärkender Abschnitt angeformt sein. Dabei kann dieser lippenartige Abschnitt zweckmäßigerweise geschlossen umlaufend ausgebildet sein.

Nach einer weiteren Ausführungsform ist die erste Stirnseite der Dichtung gegenüber einer Längsrichtung der Dichtung, korrespondierend zur Formgebung des Ventilkörpers schräg gestellt. Der Ventilkörper kann z.B. abschnittsweise zylinder- und/oder kugelförmig ausgeformt sein. Die erste Stirnseite kann dabei mit der Längsrichtung einen Winkel von etwa 45° bis 75° einschließen. Dies begünstigt die Dicht-wirkung der Dichtung.

Die vorgeschlagene Dichtung kann als solche z.B. kreis-ringförmig oder zumindest im Wesentlichen kreisringförmig ausgebildet sein. Aber auch andere davon abweichende Formgebungen sind grundsätzlich möglich und mit dem im Rahmen dieser Offenbarung vorgeschlagenen Dichtungsprinzip kompatibel.

Es wird ferner ein Fluidventil mit zumindest einer Dichtung der zuvor beschriebenen Art zur Abdichtung eines Anschlussbereiches des Fluidventils, insbesondere in Gestalt eines Mehrwege-Ventils - welches z.B. als Mischventil oder Verteilerventil fungieren kann - vorgeschlagen.

Des Weiteren wird eine Verwendung eines solchen Fluidventils als Kühlwasserventil, insbesondere eines Fahrzeugs vorgeschlagen.

Das Kühlwasserventil kann dabei die Funktion eines Mischventils oder Verteilerventils haben.

Im Weiteren wird die Erfindung unter Bezugnahme auf Figurendarstellungen im Einzelnen erläutert. Aus den Unteransprüchen und der nachfolgend detaillierten Beschreibung einer vorgeschlagenen Ausführungsform ergeben sich weitere vor-teilhafte Weiterbildungen der Erfindung. Hierzu zeigen:
- Fig.1: eine Schnittdarstellung einer Ausführungsform einer erfindungsgemäß vorgeschlagenen Dichtung in einem Fluidventil,
- Fig.2: eine vergrößerte Darstellung der in Fig.1 gezeigten Ausführungsform,
- Fig.3: eine perspektivische Darstellung des in den Fig.1 und 2 gezeigten Stützelements,
- Fig.4: eine perspektivische Schnittdarstellung der in den Fig. 1 und 2 gezeigten Ausführungsform,
- Fig.5: eine Draufsicht sowie eine perspektivische Ansicht des Stützelements und
- Fig.6: eine perspektivische Darstellung der in den Fig.1, 2 und 4 gezeigten Dichtung.

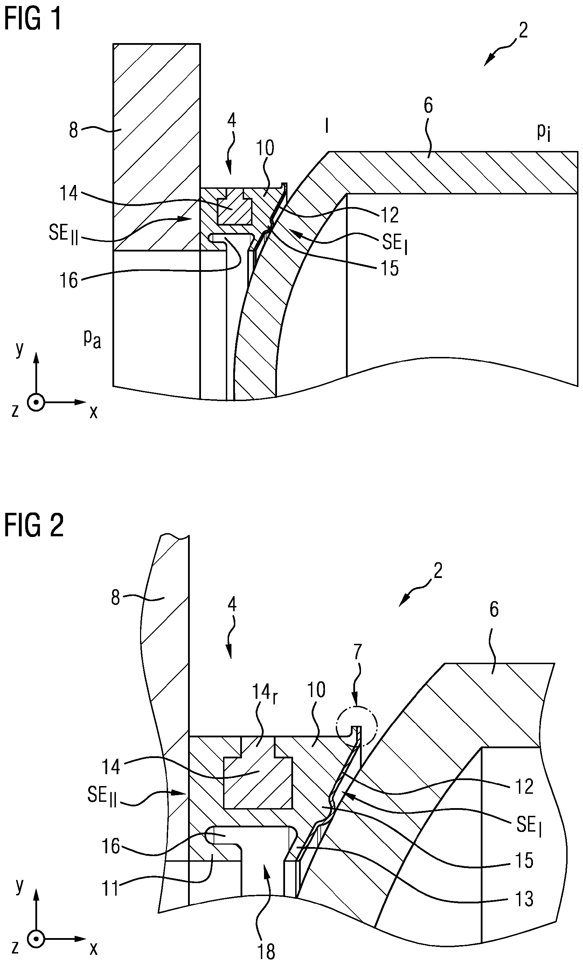

Fig.1 und Fig.2 veranschaulichen eine Schnittdarstellung eines Fluidventils 2, welches zur Verwendung als Kühlwasserventilauch Kühlwassersteuerventil oder Kühlwasserregelventil genannt - in einem Fahrzeug vorgesehen ist. Das Fluidventil 2 kann dabei z.B. als Mischventil oder Verteilerventil fungieren. Im Fluidventil 2 ist eine kreisringförmige, einstückige Dichtung 4 zwischen einem stellbaren, abschnittsweise kugelförmigen Ventilkörper 6 und einem Ventilgehäuse 8 angeordnet. Die Dichtung 4 umfasst dabei ein erstes, elastisch verformbares Kunststoffteil 10 sowie ein zweites, als Hart-Dichtelement ausgebildetes Kunststoffteil 12, welches als solches in Gestalt einer dünnen Kunststoffschicht auf das erste Kunststoffteil 10 aufvulkanisiert ist. Dieses Hart-Dichtelement kann dabei beispielsweise aus einem PTFE-Kunststoff und dergleichen mehr ausgebildet sein. Das ventilkörperseitige Ende SEₗ der Dichtung umfasst dabei eine Stirnseite Sₗ mit einer umlaufend vorspringenden Wulst 15, die mit dem Ventilkörper 6 statisch dichtwirkend zusammenwirkt und dabei linien- und/oder flächenartig abdichtet.

Die Kunststoffschicht 12 ist ferner im Bereich der Wulst 15 komplementär zum Kunststoffteil 10 geformt, wobei sich das Kunststoffteil 10 in die Kunststoffschicht 12 erstreckt und dabei die Wulst 15 bildet.

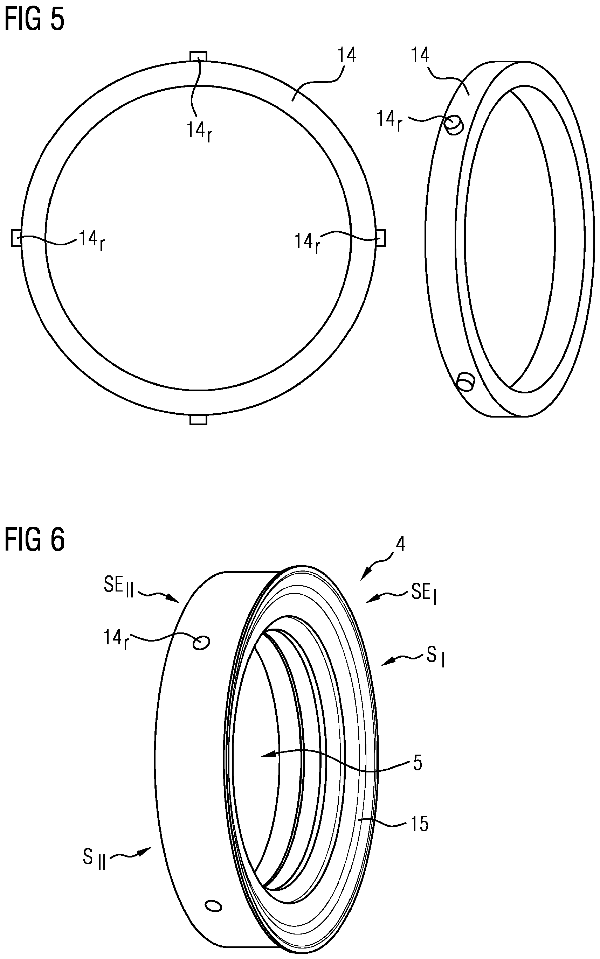

Bezüglich einer Dichtungsöffnung 5 (vgl. Fig.6) ist am Kunststoffteil 10 innenseitig bzw. an einer geschlossen umlaufenden Innenseite des Kunststoffteils 10 eine geschlossen umlaufende, fluidisch kraftverstärkende Ausnehmung 16 ausgeformt, deren geschlossen umlaufende, fluidische Eintrittsöffnung 18 durch zwei einander gegenüber liegende, lippenartige, elastisch verformbare und fluidisch kraftverstärkende Abschnitte 11, 13 begrenzt wird (siehe Fig.1 oder Fig.2) . Der ventilkörperseitige Abschnitt 13 ist dabei ventilkörperseitig von der besagten Kunststoffschicht 12 überzogen. Zwar reduziert diese Kunststoffschicht 12 als solche die elastische Verformbarkeit des Abschnitts 13, jedoch wirkt dieser dünnwandige Abschnitt 13 im Sinne eines offenen und biegeweichen Profils und verbleibt somit zum Ventilkörper 6 hin hinreichend elastisch verformbar bzw. anschaulich um eine Querrichtung Z - Z biegbar, so dass der Abschnitt 13 die Dichtwirkung der Wulst 15 bei einem sich entsprechend einstellenden fluidischen Druck pₐ zusätzlich unterstützt. Der Druck pₐ bewirkt zudem, dass sich der ventilgehäuseseitige Abschnitt 11 hin zum Ventilgehäuse 8 elastisch verformt bzw. anschaulich um die Querrichtung Z - Z biegt und dabei die dynamische Dichtwirkung am ventilgehäuseseitigen Ende SEₗₗ der Dichtung 4 zusätzlich unterstützt. Der Druck pₐ weitet die Eintrittsöffnung 18 und somit die Ausnehmung 16 förmlich auf.

Auch wenn die Figurendarstellungen dies nicht zeigen, kann grundsätzlich auch das ventilgehäuseseitige Ende SEₗₗ der Dichtung 4 eine Stirnseite Sₗₗ mit einer umlaufend vorspringenden Wulst umfassen, die mit dem Ventilgehäuse 8 dynamisch dichtwirkend zusammenwirkt und dabei linien- und/oder flächenartig abdichtet.

Des Weiteren ist bezüglich der Dichtungsöffnung 5 an der Dichtung 4 ventilkörper- und außenseitig ein geschlossen umlaufender, lippenartiger, elastisch verformbarer und fluidisch kraftverstärkender Abschnitt 7 angeformt, der als solcher ventilkörperseitig von der besagten Kunststoffschicht 12 überzogen ist. Dabei gilt auch mit Bezug auf diesen Abschnitt 7 - analog zum besagten Abschnitt 13 -, dass die Kunststoffschicht 12 als solche zwar die elastische Verformbarkeit des Abschnitts 7 reduziert, jedoch verbleibt auch dieser Abschnitt 7, der im Sinne eines dünnwandigen offenen und biegeweichen Profils wirkt, zum Ventilkörper 6 hin hinreichend elastisch verformbar bzw. anschaulich um die Querrichtung Z - Z biegbar, so dass der Abschnitt 7 die Dichtwirkung der Wulst 15 bei einem sich entsprechend einstellenden fluidischen Druck pᵢ zusätzlich unterstützt.

Die ventilkörperseitige Stirnseite Sₗ der Dichtung 4 ist zudem gegenüber einer Längsrichtung X - X der Dichtung 4, korrespondierend zur Formgebung des kugelförmigen Ventilkörperabschnitts 6 schräg gestellt (siehe. z.B. Fig.1 oder Fig.2). Die Stirnseite Sₗ kann dabei mit der Längsrichtung X - X einen Winkel von etwa 45° bis 75° einschließen, um die ventilkörperseitige Dichtwirkung zu begünstigen.

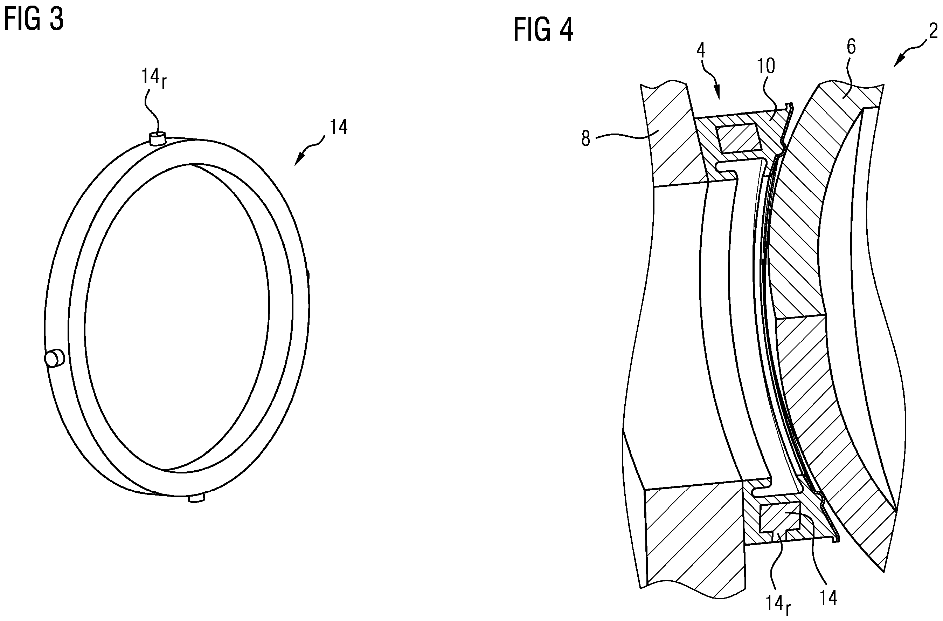

Ferner ist in das Kunststoffteil 10 ein kreisringförmiges, geschlossen umlaufend ausgebildetes Stützelement 14 aus Metall oder Kunststoff integriert, welches zur Stabilität der Dichtung 4 beiträgt (siehe. z.B. Fig.1, Fig.2 oder Fig.3). Das Stützelement 14 ist dabei mit dem Kunststoff des Kunststoffteils 10 im Wesentlichen vollständig umspritzt. Das Stützelement 14 umfasst ferner z.B. vier stiftartige Vorsprünge 14ᵣ, die über den Umfang des Stützelements 14 gleichmäßig, d.h. um 90° zueinander versetzt angeordnet sind und bezüglich der Dichtungsöffnung 5 am Stützelement 14 radial außenseitig bzw. an einer umlaufenden Außenseite des Stützelements 14 radial nach außen vorspringen. Bis auf die Stirnseite des freien Endes des jeweiligen Vorsprunges 14ᵣ ist das Stützelement 14 vollständig vom Kunststoff des Kunststoffteils 10 umspritzt bzw. in das Kunststoffteil 10 integriert, wobei die jeweilige Stirnseite z.B. zumindest im Wesentlichen bündig mit der Außenseite des Kunststoffteils 10 abschließt. Diese stiftartigen Vorsprünge 14ᵣ fungieren dabei als Festlegungsmittel zur relativen Festlegung des Stützelements 14 gegenüber dem Kunststoffteil 10. Neben der in den Figuren dargestellten viereckigen Querschnittsform des Stützelements 14 (vgl. z.B. Fig.4) sind grundsätzlich auch andere Querschnittsformen denkbar, so z.B. eine kreisförmige oder dreieckige Querschnittsform. Durch eine entsprechende Wahl der Querschnittsform lässt sich auch eine gewünschte Federkonstante des Kunststoffteils 10 einstellen und somit das elastische Verhalten der Dichtung 4 beeinflussen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Dichtung (4) zur Verwendung in einem Fluidventil (2), umfassend:
ein erstes, elastisch verformbares Kunststoffteil (10) und ein zweites, als Hart-Dichtelement ausgebildetes Kunststoffteil (12), welches mit dem ersten Kunststoffteil (10) verbunden ist, wobei das erste und das zweite Kunststoffteil (10, 12) eine Dichtungsanordnung (4) mit einem ersten stirnseitigen Ende (SEI) zur dichtenden Anlage gegen einen stellbaren Ventilkörper (6) des Fluidventils (2) und ein zweites stirnseitiges Ende (SEII) zur dichtenden Anlage gegen ein Ventilgehäuse (8) des Fluidventils (2) bilden, wobei zumindest das erste stirnseitige Ende (SEI) eine erste Stirnseite (SI) mit einer umlaufend vorspringenden Wulst (15) zur Abdichtung gegenüber dem stellbaren Ventilkörper (6) aufweist, wobei bezüglich einer Dichtungsöffnung (5) am ersten Kunststoffteil (10) innenseitig zumindest eine fluidisch kraftverstärkende Ausnehmung (16) ausgeformt ist, und wobei die Ausnehmung (16) durch zwei einander gegenüber liegende, lippenartige, elastisch verformbare und fluidisch kraftverstärkende Abschnitte (11, 13) begrenzt wird, die eine Eintrittsöffnung (18) für ein Fluid bilden, **dadurch gekennzeichnet, dass** ein Abschnitt (13) ventilkörperseitig ist und der andere Abschnitt (11) ventilgehäuseseitig ist.

2. Dichtung nach Anspruch 1, wobei das zweite Kunststoffteil (12) in Gestalt einer dünnwandigen Struktur ausgebildet ist, welche im Bereich der Wulst (15) gegenüber dem stellbaren Ventilkörper (6) abdichtet.

3. Dichtung nach Anspruch 1 oder 2, wobei das zweite Kunststoffteil (12) zumindest im Bereich der Wulst (15) komplementär zum ersten Kunststoffteil (10) geformt ist, wobei sich das erste Kunststoffteil (10) in das zweite Kunststoffteil (12) erstreckt und dabei die Wulst (15) bildet.

4. Dichtung nach Anspruch 2 oder 3, wobei das zweite Kunststoffteil (12) als eine dünne Kunststoffschicht auf das erste Kunststoffteil (10) aufvulkanisiert ist.

5. Dichtung nach einem der Ansprüche 1 bis 4, wobei in das erste Kunststoffteil (10) zumindest ein Stützelement (14) aus Kunststoff und/oder Metall integriert ist.

6. Dichtung nach Anspruch 5, wobei das Stützelement (14) geschlossen umlaufend ausgebildet ist.

7. Dichtung nach Anspruch 5 oder 6, wobei das Stützelement (14) zumindest ein Festlegungsmittel (14r) zur relativen Festlegung des Stützelements (14) gegenüber dem ersten Kunststoffteil (10) aufweist.

8. Dichtung nach einem der Ansprüche 5 bis 7, wobei das Stützelement (14) mit dem Kunststoff des ersten Kunststoffteils (10) zumindest teilweise umspritzt ist.

9. Dichtung nach einem der vorhergehenden Ansprüche, wobei die Ausnehmung (16) geschlossen umlaufend ausgebildet ist

10. Dichtung nach einem der vorhergehenden Ansprüche, wobei bezüglich der Dichtungsöffnung (5) an der Dichtung (4) ventilkörper- und außenseitig zumindest ein lippenartiger, elastisch verformbarer und fluidisch kraftverstärkender Abschnitt (7) angeformt ist.

11. Dichtung nach Anspruch 10, wobei der lippenartige Abschnitt (7) geschlossen umlaufend ausgebildet ist.

12. Dichtung nach einem der vorhergehenden Ansprüche, wobei die erste Stirnseite (SI) der Dichtung (4) gegenüber einer Längsrichtung (X - X) der Dichtung (4), korrespondierend zur Formgebung des Ventilkörpers (6) schräg gestellt ist.

13. Dichtung nach Anspruch 12, wobei die erste Stirnseite (SI) mit der Längsrichtung (X - X) einen Winkel von etwa 45° bis 75° einschließt.

14. Dichtung nach einem der vorhergehenden Ansprüche, wobei die Dichtung (4) kreisringförmig oder zumindest im Wesentlichen kreisringförmig ausgebildet ist.

15. Dichtung nach einem der vorhergehenden Ansprüche, wobei das Hart-Dichtelement aus einem ein PTFE-Kunststoff ausgebildet ist.

16. Fluidventil mit zumindest einer Dichtung (4) nach einem der vorhergehenden Ansprüche zur Abdichtung eines Anschlussbereiches des Fluidventils (2).

17. Fluidventil nach Anspruch 16 in Gestalt eines Mehrwege-Ventils.

18. Verwendung eines Fluidventils (2) nach Anspruch 16 oder 17 als Kühlwasserventil.

19. Verwendung nach Anspruch 18, wobei das Fluidventil (2) als Kühlwasserventil eines Fahrzeugs verwendet wird.

## Claims

1. Seal (4) for use in a fluid valve (2), comprising:
a first, elastically deformable plastics part (10), and a second plastics part (12) which is configured as a hard seal element and which is connected to the first plastics part (10), wherein the first and the second plastics part (10, 12) form a seal assembly (4) having a first frontal end (SEI) for bearing in a sealing manner on an actuatable valve body (6) of the fluid valve (2), and a second frontal end (SEII) for bearing in a sealing manner on a valve housing (8) of the fluid valve (2), wherein at least the first frontal end (SEI) has a first end side (SI) having an encircling projecting bead (15) for sealing against the actuatable valve body (6), wherein at least one clearance (16) that fluidically increases the force is molded on the inside of the first plastics part (10) in relation to a seal opening (5), and wherein the clearance (16) is delimited by two mutually opposite lip-type, elastically deformable portions (11, 13) that fluidically increase the force, said portions (11, 13) forming an entry opening (18) for a fluid, **characterized in that** one portion (13) is proximal to the valve body and the other portion (11) is proximal to the valve housing.

2. Seal according to Claim 1, wherein the second plastics part (12) is configured in the shape of a thin-wall structure which in the region of the bead (15) seals against the actuatable valve body (6).

3. Seal according to Claim 1 or 2, wherein the second plastics part (12) at least in the region of the bead (15) is moulded so as to be complementary to the first plastics part (10), wherein the first plastics part (10) extends into the second plastics part (12), thereby forming the bead (15).

4. Seal according to Claim 2 or 3, wherein the second plastics part (12) as a thin plastics layer is vulcanized onto the first plastics part (10).

5. Seal according to one of Claims 1 to 4, wherein at least one support element (14) made from plastics and/or metal is integrated in the first plastics part (10).

6. Seal according to Claim 5, wherein the support element (14) is configured so as to be closed in an encircling manner.

7. Seal according to Claim 5 or 6, wherein the support element (14) has at least one securing means (14r) for securing the support element (14) relative to the first plastics part (10).

8. Seal according to one of Claims 5 to 7, wherein the support element (14) is at least partially injection-moulded with the plastic of the first plastics part (10).

9. Seal according to one of the preceding claims, wherein the clearance (16) is configured so as to be closed in an encircling manner.

10. Seal according to one of the preceding claims, wherein at least one lip-type, elastically deformable portion (7) that fluidically increases the force is moulded on the seal (4) on the outside toward the valve body in relation to the seal opening (5).

11. Seal according to Claim 10, wherein the lip-type portion (7) is configured so as to be closed in an encircling manner.

12. Seal according to one of the preceding claims, wherein the first end side (SI) of the seal (4) is set at an angle to a longitudinal direction (X - X) of the seal (4), in a manner corresponding to the shaping of the valve body (6).

13. Seal according to Claim 12, wherein the first end side (SI) encloses an angle of about 45° to 75° with the longitudinal direction (X - X).

14. Seal according to one of the preceding claims, wherein the seal (4) is formed in a toroidal or at least substantially toroidal manner.

15. Seal according to one of the preceding claims, wherein the hard seal element is configured from a PTFE plastic.

16. Fluid valve having at least one seal (4) according to one of the preceding claims for sealing off a connection region of the fluid valve (2).

17. Fluid valve according to Claim 16 in the form of a manifold valve.

18. Use of a fluid valve (2) according to Claim 16 or 17 as a cooling water valve.

19. Use according to Claim 18, wherein the fluid valve (2) is used as a cooling water valve of a vehicle.

## Revendications

1. Joint d'étanchéité (4) pour utilisation dans une soupape de fluide (2), comprenant :
une première partie en matière plastique (10) déformable élastiquement et une deuxième partie en matière plastique (12) configurée sous forme d'élément d'étanchéité dur, qui est reliée à la première partie en matière plastique (10), la première et la deuxième partie en matière plastique (10, 12) formant un agencement d'étanchéité (4) comprenant une première extrémité frontale (SEI) pour l'application étanche contre un corps de soupape réglable (6) de la soupape de fluide (2) et une deuxième extrémité frontale (SEII) pour l'application étanche contre un boîtier de soupape (8) de la soupape de fluide (2), au moins la première extrémité frontale (SEI) présentant un premier côté frontal (SI) comprenant un bourrelet périphérique en saillie (15) pour assurer l'étanchéité par rapport au corps de soupape réglable (6), au moins un évidement renforçant fluidiquement la force (16) étant formé du côté intérieur sur la première partie en matière plastique (10) au regard d'une ouverture d'étanchéité (5), et l'évidement (16) étant délimité par deux sections (11, 13) situées à l'opposé l'une à l'autre, en forme de lèvres, déformables élastiquement et renforçant fluidiquement la force, qui forment une ouverture d'entrée (18) pour un fluide, **caractérisé en ce qu'**une section (13) est du côté du corps de soupape et l'autre section (11) est du côté du boîtier de soupape.

2. Joint d'étanchéité selon la revendication 1, dans lequel la deuxième partie en matière plastique (12) est configurée sous la forme d'une structure à paroi mince qui assure l'étanchéité dans la zone du bourrelet (15) par rapport au corps de soupape réglable (6).

3. Joint d'étanchéité selon la revendication 1 ou 2, dans lequel la deuxième partie en matière plastique (12) est formée de manière complémentaire à la première partie en matière plastique (10) au moins dans la zone du bourrelet (15), la première partie en matière plastique (10) s'étendant dans la deuxième partie en matière plastique (12) et formant ainsi le bourrelet (15).

4. Joint d'étanchéité selon la revendication 2 ou 3, dans lequel la deuxième partie en matière plastique (12) est vulcanisée sur la première partie en matière plastique (10) sous la forme d'une couche de matière plastique mince.

5. Joint d'étanchéité selon l'une quelconque des revendications 1 à 4, dans lequel au moins un élément de support (14) en matière plastique et/ou en métal est intégré dans la première partie en matière plastique (10) .

6. Joint d'étanchéité selon la revendication 5, dans lequel l'élément de support (14) est configuré sous forme périphérique fermée.

7. Joint d'étanchéité selon la revendication 5 ou 6, dans lequel l'élément de support (14) présente au moins un moyen de fixation (14r) pour la fixation relative de l'élément de support (14) par rapport à la première partie en matière plastique (10).

8. Joint d'étanchéité selon l'une quelconque des revendications 5 à 7, dans lequel l'élément de support (14) est au moins partiellement surmoulé avec la matière plastique de la première partie en matière plastique (10).

9. Joint d'étanchéité selon l'une quelconque des revendications précédentes, dans lequel l'évidement (16) est configuré sous forme périphérique fermée.

10. Joint d'étanchéité selon l'une quelconque des revendications précédentes, dans lequel au moins une section (7) en forme de lèvre, déformable élastiquement et renforçant fluidiquement la force est formée sur le joint d'étanchéité (4) du côté du corps de soupape et du côté extérieur, au regard de l'ouverture d'étanchéité (5).

11. Joint d'étanchéité selon la revendication 10, dans lequel la section en forme de lèvre (7) est configurée sous forme périphérique fermée.

12. Joint d'étanchéité selon l'une quelconque des revendications précédentes, dans lequel le premier côté frontal (SI) du joint d'étanchéité (4) est disposé en biais par rapport à une direction longitudinale (X-X) du joint d'étanchéité (4), en correspondance à la forme du corps de soupape (6).

13. Joint d'étanchéité selon la revendication 12, dans lequel le premier côté frontal (SI) forme un angle d'environ 45° à 75° avec la direction longitudinale (X-X) .

14. Joint d'étanchéité selon l'une quelconque des revendications précédentes, dans lequel le joint d'étanchéité (4) est configuré sous forme annulaire ou au moins essentiellement sous forme annulaire.

15. Joint d'étanchéité selon l'une quelconque des revendications précédentes, dans lequel l'élément d'étanchéité dur est formé en une matière plastique de PTFE.

16. Soupape de fluide comprenant au moins un joint d'étanchéité (4) selon l'une quelconque des revendications précédentes pour assurer l'étanchéité d'une zone de raccordement de la soupape de fluide (2).

17. Soupape de fluide selon la revendication 16 sous forme d'une soupape à plusieurs voies.

18. Utilisation d'une soupape de fluide (2) selon la revendication 16 ou 17 en tant que soupape d'eau de refroidissement.

19. Utilisation selon la revendication 18, dans laquelle la soupape de fluide (2) est utilisée en tant que soupape d'eau de refroidissement d'un véhicule.
